# EUROPÄISCHE PATENTANMELDUNG

(11) **EP 1 211 823 A1**
(43) Veröffentlichungstag der Anmeldung: **05.06.2002**
(21) Anmeldenummer: 00125872.2
(22) Anmeldetag: 24.11.2000
(51) Int. Cl.: H04B 7/26, H04J 3/16

(54) **Zeitmultiplexverfahren zur Datenübertragung**

(71) Anmelder: SIEMENS AKTIENGESELLSCHAFT, 80333 München (DE)
(72) Erfinder: Cyranka, Oliver, 80336 München (DE)

(57) **Zusammenfassung**

Zur Datenübertragung über eine Funkschnittstelle zwischen Funkstationen in einem Funkkommunikationssystem nach einem Zeitmultiplexverfahren werden mehrere Kanäle in einem Zeitrahmen (ZRk) übertragen, wobei den Kanälen jeweils ein Zeitschlitz (ZS) zugeordnet wird. Für einen Teilnehmer werden mindestens zwei Kanäle gebündelt. Die zu übertragenden Daten werden sendeseitig in Datenblöcken (DBj+1) gruppiert. Je Datenblock (DBj+1) werden die Daten bezüglich ihrer zeitlichen Anordnung verwürfelt und in Funkblöcke (Bi) unterteilt. Die den gebündelten Kanälen zugeordneten Funkblöcke (B1, B2, B3, B4) werden in benachbarten Zeitschlitzen (ZS) eines Zeitrahmens (ZR1) übertragen.

## Beschreibung

Die Erfindung betrifft ein Verfahren zur Datenübertragung über eine Funkschnittstelle zwischen Funkstationen in einem Funkkommunikationssystem nach einem Zeitmultiplexverfahren.

In Funkkommunikationssystemen werden Daten mit Hilfe von elektromagnetischen Wellen über eine Funkschnittstelle zwischen einer sendenden und einer empfangenden Funkstation übertragen. Verschiedenen Teilnehmern werden dabei jeweils Kanäle zugeordnet, die durch einen verwendeten Frequenzbereich, Zeitschlitz und/oder Code definiert werden (siehe J. Eberspächer et al, GSM Global System for Mobile Communication, Teubner 1997, S. 15-26).

Beim Zeitmultiplexverfahren werden mehrere Kanäle in einem Zeitrahmen übertragen, wobei mehrere Zeitschlitze den Zeitrahmen bilden und den Kanälen jeweils ein Zeitschlitz zugeordnet wird. Zu übertragende Daten werden sendeseitig in Datenblöcke gruppiert. Je Datenblock werden die Daten bezüglich ihrer zeitlichen Anordnung verwürfelt. Zum Senden wird jeder Datenblock in mehrere Funkblöcke, die in der Literatur häufig als Burst bezeichnet werden, unterteilt. Die Funkblöcke der verschiedenen Kanäle werden zeitlich verschränkt, so daß je Zeitrahmen nur ein Funkblock des jeweiligen Kanals übertragen wird.

Das zeitliche Verschränken der Funkblöcke, das als Interleaving bezeichnet wird, erfolgt z.B. bei GPRS CS1-CS4 über vier Zeitrahmen hinweg (siehe GSM 05.03, Version 07.30, section 4.1.4). Demnach können die Daten empfängerseitig frühestens nach vier Zeitrahmen decodiert werden. Dieses führt zu einer Verzögerung der Datenübertragung.

Zur Erhöhung der Bitrate in der Datenübertragung wurde vorgeschlagen (siehe z.B. GSM 04.21 version 7.1.0 Release 1998), für einen Teilnehmer mehrere Kanäle zu bündeln. In diesem Fall werden aufeinanderfolgende Funkblöcke den gebündelten Kanälen zugeordnet. Je Funkblock werden die Daten bezüglich ihrer zeitlichen Anordnung wiederum verwürfelt. Nach dem Verwürfeln werden die Funkblöcke, die den gebündelten Kanälen zugeordnet sind, zeitlich verschränkt, so daß sie in unterschiedlichen Zeitrahmen übertragen werden. Durch das Interleaving werden in einem Zeitrahmen in benachbarten Zeitschlitzen Funkblöcke übertragen, die zwar den gebündelten Kanälen zuzuordnen sind, die jedoch unterschiedlichen Zeitrahmen zuzuordnen sind. Daher kann auch in diesem Fall erst nach Ablauf derjenigen Zahl von Zeitrahmen, die der Interleaving-Tiefe entsprechen, mit dem Decodieren der Daten begonnen werden.

Der Erfindung liegt somit das Problem zugrunde, ein Verfahren zur Datenübertragung anzugeben, bei dem die Laufzeit der Daten zwischen Sender und Empfänger im Vergleich zu den bekannten Verfahren reduziert ist.

Dieses Problem wird erfindungsgemäß gelöst durch ein Verfahren gemäß Anspruch 1. Weitere Ausgestaltungen der Erfindung gehen aus den übrigen Ansprüchen hervor.

In dem Verfahren zur Datenübertragung über eine Funkschnittstelle zwischen Funkstationen in einem Funkkommunikationssystem nach einem Zeitmultiplexverfahren werden mehrere Kanäle in einem Zeitrahmen übertragen, wobei den Kanälen jeweils ein Zeitschlitz des Zeitrahmens zugeordnet wird. Für einen Teilnehmer werden mindestens zwei Kanäle gebündelt. Die zu übertragenden Daten werden senderseitig in Datenblöcken zusammengefasst. Je Datenblock werden die Daten bezüglich ihrer zeitlichen Anordnung verwürfelt und in Funkblöcke unterteilt. Die Anzahl der Funkblöcke entspricht dabei der Anzahl der gebündelten Kanäle. Nachfolgend werden die den gebündelten Kanälen zugeordneten Funkblöcke in benachbarten Zeitschlitzen eines Zeitrahmens übertragen. Da erfindungsgemäß die den gebündelten Kanälen zugeordneten Funkblöcke in benachbarten Zeitschlitzen ein und desselben Zeitrahmens übertragen werden, kann in diesem Verfahren die Decodierung bereits nach Ablauf des einen Zeitrahmens erfolgen. Dadurch wird die Laufzeit der Daten zwischen Sender und Empfänger reduziert. Das Verwürfeln der Daten je Datenblock und die Unterteilung der Datenblöcke in Funkblöcke erfolgt analog wie in dem bekannten Verfahren, lediglich der Sendezeitpunkt der Funkblöcke ist ein anderer.

Es liegt im Rahmen der Erfindung, die Funkblöcke, die in benachbarten Zeitschlitzen gesendet werden und die zusammen einen Datenblock bilden, als gemeinsamen Funkblock aufzufassen.

Um den Einfluß von Abschattungen oder Signalschwund aufgrund von Mehrwegeausbreitung auf die bei der Übertragung auftretenden Bitfehler zu begrenzen, ist es vorteilhaft, die Daten in benachbarten Zeitschlitzen mit unterschiedlicher Frequenz zu übertragen.

Darüber hinaus kann der Einfluß des Signalschwunds auf die Qualität der Datenübertragung dadurch begrenzt werden, daß die Datenübertragung in benachbarten Zeitschlitzen jeweils über unterscheidbare Sendeeinrichtungen erfolgt. Als unterscheidbare Sendeeinrichtungen werden zum Beispiel räumlich getrennte Antennen verwendet. Die Datenübertragung erfolgt in diesem Fall vorzugsweise im Sinne einer Receive-Diversity und/ oder Transmit-Diversity. Dieses kann alternativ oder zusätzlich zur Übertragung in benachbarten Zeitschlitzen mit unterschiedlicher Frequenz erfolgen.

Gemäß einer weiteren Ausführungsform der Erfindung wird der Einfluß des Signalschwunds auf die Qualität der Datenübertragung dadurch begrenzt, daß die Datenübertragung über mindestens zwei unterscheidbare Sendeeinrichtungen erfolgt, wobei empfangsseitig parallel mindestens zwei Empfangssignale empfangen werden. Diese Empfangsart wird auch als Diversity-Empfang bezeichnet. Das Senden über unterscheidbare Sendeeinrichtungen erfolgt zum Beispiel in einer Basisstation, die als sendende Funkstation wirkt. Auch diese Maßnahme ist zusätzlich zur Übertragung in benachbarten Zeitschlitzen mit unterschiedlicher Frequenz möglich.

Zur Erhöhung der Datenrate ist es vorteilhaft, nur in einem der Funkblöcke, die den gebündelten Kanälen zugeordnet sind, zusätzliche Symbole einer Trainingssequenz vorzusehen, die empfangsseitig über ein bekanntes Muster zur Schätzung der Übertragungsfunktion verwendet werden. In bekannten Verfahren enthält jeder Funkblock zusätzliche Symbole einer derartigen Trainingssequenz, so daß in jedem Funkblock eine vorgegebene Anzahl an Bits für die Datenübertragung nicht zur Verfügung steht. In dem erfindungsgemäßen Verfahren dagegen wird ausgenutzt, daß benachbarte Funkblöcke in benachbarten Zeitschlitzen gesendet werden. Es wird dabei angenommen, daß sich über diese benachbarten Zeitschlitze die Eigenschaften des Funkkanals nicht allzu sehr ändern. Dieses ist unter anderem bei Indoor-Anwendungen mit einer quasi-stationären Mobilstation der Fall. Da nur einer der Funkblöcke die Symbole einer Trainingssequenz enthält, können in den übrigen Funkblöcken in dem selben Zeitrahmen zusätzliche Daten übertragen werden.

Vorzugsweise enthält derjenige Funkblock die zusätzlichen Symbole der Trainingssequenz, der im jeweiligen Zeitrahmen zuerst gesendet wird. Dadurch wird erreicht, daß bereits nach Ende des ersten Zeitschlitzes die Übertragungsfunktion geschätzt und die Signale ausgewertet werden können.

Für einen Teilnehmer können zwei oder mehr Kanäle gebündelt werden. Maximal können alle Kanäle eines Zeitrahmens für einen Teilnehmer gebündelt werden. Es ist zweckmäßig, in dem erfindungsgemäßen Verfahren für einen Teilnehmer vier Kanäle zu bündeln, da dieses dem vierfachen Interleaving, das bei nichttransparenten Datendiensten wie z.B. GPRS oder EGPRS üblich ist, entspricht.

Zum Senden der Daten ist eine Funkstation erforderlich, die in mehreren aufeinanderfolgenden Zeitschlitzen Funkblöcke aussenden kann. Derartige mobile Funkstationen werden auch als Multi-Slot-Mobilstation bezeichnet.

Im folgenden wird die Erfindung anhand eines Beispiels und der Figuren näher erläutert.
- Figur 1: zeigt ein Mobil-Kommunikationssystem.
- Figur 2: zeigt in Datenblöcke gruppierte Daten.
- Figur 3: zeigt eine Aufteilung der Datenblöcke in Funkblöcke.
- Figur 4: zeigt anhand eines Zeitstrahls die Sendezeitpunkte der Funkblöcke.
- Figur 5: zeigt anhand eines Zeitstrahls die Sendezeitpunkte der Funkblöcke in einem aus der Stand der Technik bekannten Verfahren.
- Figur 6: zeigt anhand eines Zeitstrahls die Sendezeitpunkte von vier Funkblöcken, von denen einer eine Trainingssequenz enthält.

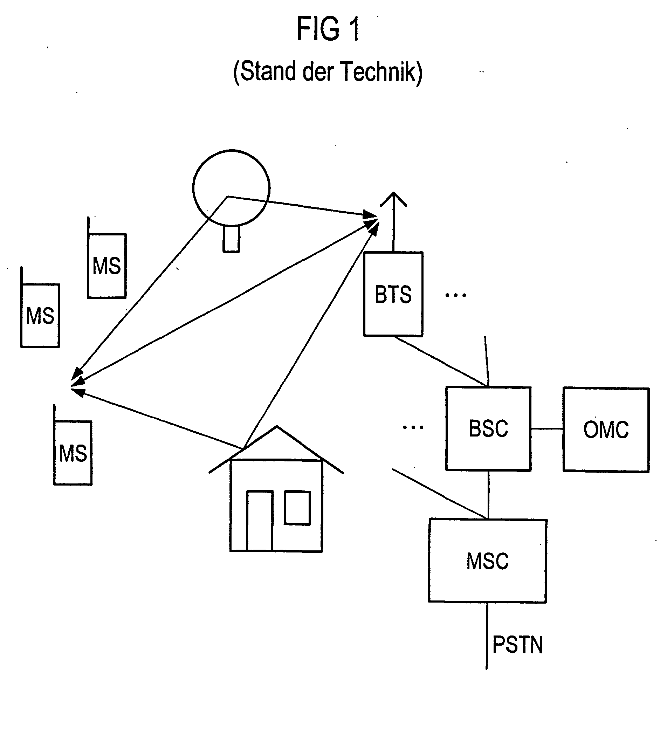

In einem in seinen Komponenten bekannten GSM-Mobilfunksystem (siehe Figur 1) sind eine Vielzahl von Mobilvermittlungsstellen MSC vorgesehen, die untereinander vernetzt sind und über die der Zugang zu einem Festnetz PSTN hergestellt wird. Darüberhinaus sind diese Mobilvermittlungsstellen MSC mit jeweils mindestens einem Basisstationscontroller BSC verbunden.

Jeder Basisstationscontroller BSC ermöglicht darüberhinaus eine Verbindung zu mindestens einer Basisstation BTS. Eine solche Basisstation BTS ist eine Funkstation, die über eine Funkschnittstelle eine Nachrichtenverbindung zu einer Mobilstation MS aufbauen kann. In Figur 1 ist beispielhaft eine solche Funkverbindung zu einer Mobilstation MS dargestellt.

Zu dem Mobilkommunikationssystem gehört ferner ein Organisations- und Wartungszentrum OMC, in dem eine Verwaltung der Konfiguration, der Software, der Leistungsparameter (Performance) sowie eine Verwaltung der auftretenden Fehler vorgenommen wird. Dazu erhält das Operations- und Wartungszentrum OMC Fehlermeldungen sowie Meldungen über Operations- und Leistungszustände der Komponenten des Mobilkommunikationssystems. Zur Verwaltung des gesamten Mobilkommunikationssystems können ein oder mehrere Operations- und Wartungszentren OMC eingesetzt werden.

Die Funkschnittstelle zwischen der Basisstation BTS und der Mobilstation MS ist nach dem Zeitmultiplexverfahren organisiert. Auf einer Trägerfrequenz werden z.B. acht Zeitlagen, auch Zeitschlitze genannt, bereitgestellt, die für verschiedene Kommunikationsverbindungen und zur Organisation der Funkschnittstelle benutzt werden können. Acht aufeinanderfolgende Zeitlagen werden als Zeitrahmen bezeichnet. Jede Zeitlage wird einem Kanal zugeordnet. Stellt eine Basisstation BTS auch mehrere Trägerfrequenzen bereit, liegt zusätzlich ein Frequenzmultiplex vor. Zur Informationsübertragung auf der Funkschnittstelle wird insbesondere auf P. Vary, Implementation aspects of the pan-european digital mobile radio system, IEEE-proceedings, 1983, 4-17 bis 4-22 verwiesen.

Im GSM-Mobilfunksystem werden die Informationen funkblockweise, auch burstweise genannt, übertragen, d.h. es findet keine kontinuierliche Informationsübertragung sondern eine blockweise Übertragung statt. Daten werden zunächst in Datenblöcke zusammengefasst und kodiert. Vor der Übertragung werden die Daten in Funkblöcke gruppiert. Benachbarte Funkblöcke werden in unterschiedlichen Zeitrahmen versandt.

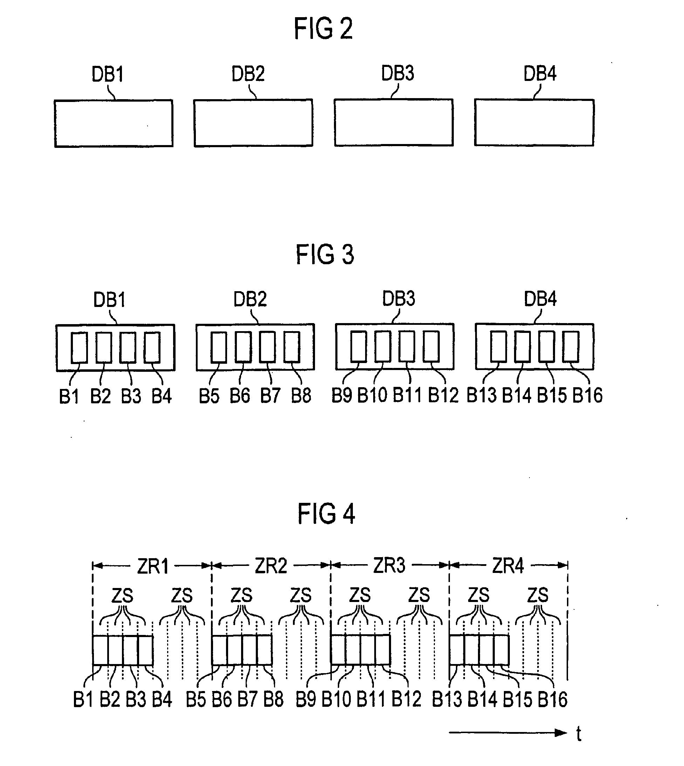

In dem erfindungsgemäßen Verfahren zur Datenübertragung werden die zu übertragenden Daten in Datenblöcke DBj+1, i=0,1,2,3, gruppiert. Jeder der Datenblöcke DBj+1 enthält 456 Bit (siehe Figur 2). Jeder der Datenblöcke DBj+1 wird über vier gebündelte Kanäle übertragen. D.h., für die Datenübertragung werden vier Kanäle eines Zeitrahmens vorgesehen.

Zur besseren Korrigierbarkeit von Bündelfehlern während der Übertragung werden nachfolgend die Daten in den einzelnen Datenblöcken DBj+1 kodiert und untereinander verwürfelt. Jeder der Datenblöcke DBj+1 wird in vier Funkblöcke Bi, i=1+j, 2+j, 3+j, 4+j, unterteilt (siehe Figur 3).

Nachfolgend werden die Funkblöcke Bi auf vier Zeitrahmen ZRk, k=1-4 verteilt (siehe Figur 4). Jeder der Zeitrahmen ZRk setzt sich aus acht Zeitschlitzen ZS zusammen und weist eine Dauer von etwa 4,6 Millisekunden auf. In dem Ausführungsbeispiel werden die ersten vier Zeitschlitze ZS eines Zeitrahmens ZRk den vier gebündelten Kanälen für die Datenübertragung zugewiesen. In dem erfindungsgemäßen Verfahren werden die Funkblöcke B1, B2, B3 und B4 des ersten Datenblocks DB1 den ersten vier Zeitschlitzen ZS des ersten Zeitrahmens ZR1 zugewiesen. Die Funkblöcke B5, B6, B7, B8 des zweiten Datenblocks DB2 werden den ersten vier Zeitschlitzen ZS des zweiten Zeitrahmens ZR2, die Funkblöcke B9, B10, B11, B12 den ersten vier Zeitschlitzen des dritten Zeitrahmens ZR3 und die Funkblöcke B13, B14, B15, B16 des vierten Datenblocks DB4 den ersten vier Zeitschlitzen ZS des vierten Zeitrahmens ZR4 zugewiesen. Da in jedem der Zeitrahmen ZRk die Funkblöcke ein und desselben Datenblocks DBj+1 übertragen werden, kann nach Ende des jeweiligen Zeitrahmens ZRk mit der Entwürflung und Decodierung der jeweiligen Daten begonnen werden. Dadurch wird die Laufzeit des Datenblocks an der Funkschnittstelle um 75 % im Vergleich zum Stand der Technik verringert.

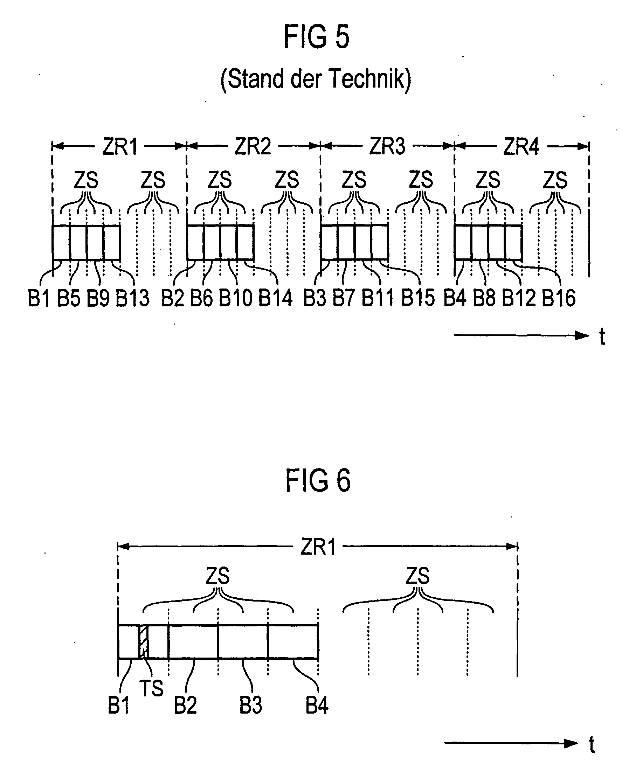

Beim Stand der Technik (siehe Figur 5) werden den ersten vier Zeitschlitzen ZS des ersten Zeitrahmens ZR1 jeweils die ersten Funkblöcke B1, B5, B9, B13 aller Datenblöcke DBj+1 zugewiesen. Entsprechend werden dem zweiten Zeitrahmen ZR2 die zweiten Funkblöcke B2, B6, B10, B14 alle Datenblöcke DBj+1 zugewiesen, dem dritten Zeitrahmen die dritten Funkblöcke B3, B7, B11, B15 und dem vierten Zeitrahmen ZR4 die vierten Funkblöcke B4, B8, B12 und B16. Mit anderen Worten wird jeder der Datenblöcke DBj+1 im Übertragungsverfahren gemäß dem Stand der Technik auf die vier Zeitrahmen ZR1, ZR2, ZR3 und ZR4 verteilt. Dieses hat im Stand der Technik die Konsequenz, das erst nach Ablauf des vierten Zeitrahmens ZR4 mit der Entwürfelung und Decodierung der Daten begonnen werden kann.

Da in dem erfindungsgemäßen Verfahren (siehe Figur 4) aufeinanderfolgende Funkblöcke B1+j, B2+j, B3+j, B4+j, j=0,1,2,3, in benachbarten Zeitschlitzen ZS gesendet werden, ist es bei Anwendungen, bei denen mit Störungen der Luftschnittstelle zu rechnen ist, zweckmäßig, die Funkblöcke unterschiedlicher Zeitschlitze ZS auf unterschiedlichen Frequenzen zu senden. Dabei wird ausgenutzt, daß Störungen der Luftschnittstelle frequenzabhängig sind. Darüberhinaus oder alternativ kann die Störanfälligkeit dadurch reduziert werden, daß in benachbarten Zeitschlitzen die Datenübertragung jeweils über unterscheidbare Sendeeinrichtungen, zum Beispiel räumlich getrennte Antennen, erfolgt. Vorzugsweise erfolgt die Datenübertragung im Sinne einer Receive-Diversity und/oder Transmit-Diversity. Weiterhin kann die Störanfälligkeit dadurch reduziert werden, daß die Datenübertragung über mindestens zwei unterscheidbare Sendeeinrichtungen erfolgt, wobei empfangsseitig parallel mindestens zwei Empfangssignale empfangen werden. In Anwendungen, in denen keine oder nur geringfügige zeitlich veränderliche Störungen der Luftschnittstelle zu befürchten sind wie z.B. Indoor-Anwendungen, etwa der Datenkommunikation von einem an einer Mobilstation angeschlossenem Computer, der Daten mit einer Basisstation austauscht, kann auf diese Schutzmechanismen verzichtet werden.

Im GSM-System ist es bekannt, den Funkblöcken zusätzliche Symbole einer Trainingssequenz hinzuzufügen, die beim Empfänger zur Schätzung der Übertragungsfunktion des Übertragungskanals verwendet werden. Gemäß einer Ausgestaltung des erfindungsgemäßen Verfahrens werden nur einem der Funkblöcke B1 zusätzliche Symbole einer Trainingssequenz TS hinzugefügt (siehe Figur 6). Vorzugsweise wird die Trainingssequenz TS dem ersten Funkblock B1 hinzugefügt. Es wird dabei ausgenutzt, daß sich die Eigenschaften der Luftschnittstelle über die Dauer der benachbarten vier Zeitschlitze, in denen die Funkblöcke eines Datenblocks DBj+1 übertragen werden, nicht allzu sehr ändert. Da nur der erste in dem jeweiligen Zeitrahmen ZRk übertragene Funkblock B1+j die Trainingssequenz enthält, können in den übrigen im selben Zeitrahmen ZRk übertragenen Funkblöcken B2+j, B3+j, B4+j eine größere Anzahl Nutzdaten übertragen werden. Dadurch wird die Datenrate gesteigert.

Da im GSM-System üblicherweise 26 Bit für die Trainingssequenz belegt werden, ergibt sich eine Steigerung der Datenrate bei einer vierfachen Kanalbündelung um etwa 17 %. Durch das erfindungsgemäße Verfahren wird der Datendurchsatz beschleunigt und es wird der Datenfluß vergleichmäßigt, da jeweils nach Ablauf eines Zeitrahmens ZRk mit der Decodierung der Daten begonnen werden kann. Daher ist das erfindungsgemäße Verfahren geeignet zum Einsatz bei nichttransparenten Datendiensten, wie z.B. GPRS oder EGPRS, bei denen der Datenfluß durch übergeordnete Protokoll mit Handshaking zwischen Sender und Empfänger gesteuert wird. Durch die Verringerung der Wartezeit der Datenblocks steigt der Nutzdatendurchsatz, da Sender und Empfänger schneller auf die empfangenen Steuerkommandos antworten können. Darüberhinaus ist das erfindungsgemäße Verfahren wegen der geringeren Laufzeit der Datenblocks für qualitativ hochwertige Echtzeitdienste geeignet.

### Bezugszeichenliste

- MSC: Mobilvermittlungsstelle
- PSTN: Festnetz
- BSC: Basisstationscontroller
- MS: Mobilstation
- BTS: Basisstation
- OMC: Organisations- und Wartungszentrum
- Bi, i=1-16: Funkblöcke
- DB1, DB2, DB3, DB4: Datenblöcke
- ZRk, k=1-4: Zeitrahmen
- ZS: Zeitschlitz
- TS: Trainingssequenz

## Patentansprüche

1. Verfahren zur Datenübertragung über eine Funkschnittstelle zwischen Funkstationen in einem Funkkommunikationssystem nach einem Zeitmultiplexverfahren,
- bei dem mehrere Kanäle in einem Zeitrahmen (ZRk) übertragen werden, wobei den Kanälen jeweils ein Zeitschlitz ZS zugeordnet wird,
- bei dem für einen Teilnehmer mindestens zwei Kanäle gebündelt werden,
- bei dem die zu übertragenden Daten sendeseitig in Datenblöcken (DBj+1) zusammengefasst werden,
- bei dem je Datenblock (DBj+1) die Daten bezüglich ihrer zeitlichen Anordnung verwürfelt und in Funkblöcke (B1) unterteilt werden,
- bei dem die den gebündelten Kanälen zugeordneten Funkblöcke in benachbarten Zeitschlitzen (ZS) eines Zeitrahmens (ZRk) übertragen werden.

2. Verfahren nach Anspruch 1,
bei dem die Daten in benachbarten Zeitschlitzen ZS mit unterschiedlicher Frequenz übertragen werden.

3. Verfahren nach Anspruch 1 oder 2,
bei dem die Datenübertragung in benachbarten Zeitschlitzen (ZS) jeweils über unterscheidbare Sendeeinrichtungen erfolgt.

4. Verfahren nach Anspruch 1 oder 2,
bei dem die Datenübertragung über mindestens zwei unterscheidbare Sendeeinrichtungen erfolgt, wobei empfangsseitig parallel mindestens zwei Empfangssignale empfangen werden.

5. Verfahren nach einem der Ansprüche 1 bis 4,
bei dem nur einer der Funkblöcke (B1), die den gebündelten Kanälen zugeordnet sind, zusätzliche Symbole einer Trainingssequenz TS enthält.

6. Verfahren nach Anspruch 5,
bei dem derjenige Funkblock (B1) die zusätzlichen Symbole der Trainingssequenz (TS) enthält, der im jeweiligen Zeitrahmen (ZRk) zuerst gesendet wird.

7. Verfahren nach einem der Ansprüche 1 bis 6,
bei dem für einen Teilnehmer vier Kanäle gebündelt werden.
